# EUROPEAN PATENT APPLICATION

(11) **EP 4 307 544 A1**
(43) Date of publication of application: **17.01.2024**
(21) Application number: 22766864.7
(22) Date of filing: 25.02.2022
(51) Int. Cl.: H02M 3/00, H02M 3/155, H02M 3/28, H02M 7/48

(54) **POWER SUPPLY DEVICE**

(30) Priority: 12.03.2021 JP 2021040531
(71) Applicant: OMRON Corporation, Kyoto-shi, Kyoto 600-8530 (JP)
(72) Inventor: TANINO, Kohei, Kyoto-shi, Kyoto 600-8530 (JP); WATANABE, Tomonori, Kyoto-shi, Kyoto 600-8530 (JP); NAGANO, Masaaki, Kyoto-shi, Kyoto 600-8530 (JP); YOSHIMARU, Kosuke, Kyoto-shi, Kyoto 600-8530 (JP); SUMI, Kosuke, Kyoto-shi, Kyoto 600-8530 (JP)
(74) Representative: HGF
(86) International application number: PCT/JP2022/007952
(87) International publication number: WO 2022/190905

(57) **Abstract**

An overvoltage protection circuit (23a) stops supplying power from a power supply apparatus (2) to a motor (4), when a voltage of a DC bus (20a, 20b) exceeds an overvoltage threshold (Vth1). A switch (Q1) and a resistor (R1) are connected to the DC bus (20a, 20b). A discharge control circuit (26) controls the switch (Q1) to consume power of the DC bus (20a, 20b) to reduce the voltage of the DC bus (20a, 20b), when the voltage of the DC bus (20a, 20b) exceeds a discharge threshold (Vth3).

## Description

### TECHNICAL FIELD

The present disclosure relates to a power supply apparatus.

### BACKGROUND ART

When a load apparatus includes a motor, the motor's regenerative power may flow to preceding circuits (motor controller, power supply apparatus, and the like). For example, Patent Document 1 discloses a direct current (DC) stabilized power supply system capable of absorbing power fluctuation to maintain power supply quality when a motor generates regenerative power.

### CITATION LIST

### PATENT DOCUMENTS

PATENT DOCUMENT 1: Japanese Patent No. JP 6502758 B

### SUMMARY OF INVENTION

### TECHNICAL PROBLEM

When a motor generates regenerative power, the voltage of its preceding circuits, such as a DC bus of the power supply apparatus, may increase. Typically, when the DC bus voltage has increased, the power supply apparatus determines that it is not necessary to further supply power, and stops operation of the circuit (for example, switching operation of the inverter). When the consumed power of the load apparatus rapidly increases during a period in which the circuit is not in operation, it may take a long response time to supply required power to the load apparatus, and the DC bus voltage may decrease. Therefore, even when the regenerative power and the consumed power of the load apparatus fluctuate rapidly, it is required to reduce the fluctuation of the DC bus voltage to stably maintain the DC bus voltage.

In addition, in order to reduce the fluctuation of the DC bus voltage caused by the regenerative power and the consumed power of the load apparatus, for example, it may be possible to connect a large number of capacitors to the DC bus. However, in this case, the size of the power supply apparatus increases in order to mount the large number of capacitors. In addition, since the capacitors simply receive the regenerative power, the DC bus voltage itself increases, and it is not possible to sufficiently reduce the fluctuation of the DC bus voltage.

An object of the present disclosure is to provide a power supply apparatus capable of reducing fluctuation of a DC bus voltage caused by regenerative power and consumed power of a load apparatus to stably maintain the DC bus voltage, without significantly increasing the circuit size.

### SOLUTION TO PROBLEM

According to a power supply apparatus of an aspect of the present disclosure, the power supply apparatus for supplying DC power to a load apparatus is provided with: a direct current (DC) bus, an overvoltage protection circuit, a discharge circuit, and a discharge control circuit. The direct current (DC) bus is connected to the load apparatus. The overvoltage protection circuit is configured to stop supplying power from the power supply apparatus to the load apparatus, when a voltage of the DC bus exceeds a predetermined overvoltage threshold. The discharge circuit is connected to the DC bus. The discharge control circuit is configured to control the discharge circuit to consume power of the DC bus to reduce the voltage of the DC bus, when the voltage of the DC bus exceeds a discharge threshold, the discharge threshold being higher than a target voltage of the DC bus and lower than the overvoltage threshold.

With such a configuration, it is possible to reduce the fluctuation of the DC bus voltage caused by the regenerative power and the consumed power of the load apparatus to stably maintain the DC bus voltage, without significantly increasing the circuit size.

According to a power supply apparatus of an aspect of the present disclosure, the overvoltage protection circuit is configured to monitor the voltage of the DC bus at a first node. The discharge control circuit is configured to monitor the voltage of the DC bus at a second node closer to the load apparatus than the first node. The power supply apparatus is further provided with a diode configured to block a current flowing from the second node to the first node.

With such a configuration, even if the overvoltage threshold is lower than a regeneration threshold, it is possible to consume the regenerative power using the discharge circuit, without stopping supplying power from the power supply apparatus to the load apparatus, and consume the regenerative power by the load apparatus itself.

According to a power supply apparatus of an aspect of the present disclosure, the power supply apparatus is further provided with: a transformer, a power converter circuit, a voltage control circuit, and a voltage feedback circuit. The power converter circuit is provided on a primary side of the transformer, and configured to convert an input voltage into an output voltage and supply the output voltage to the transformer. The voltage control circuit is provided on the primary side of the transformer, and configured to control an output voltage of the power converter circuit. The voltage feedback circuit is provided on a secondary side of the transformer, and configured to monitor the voltage of the DC bus. The overvoltage protection circuit, the voltage control circuit, and the discharge control circuit obtain the voltage of the DC bus from the voltage feedback circuit.

With such a configuration, the overvoltage protection circuit, the voltage control circuit, and the discharge control circuit can monitor the voltage of the DC bus.

According to a power supply apparatus of an aspect of the present disclosure, the voltage feedback circuit is provided with a variable resistor configured to set the target voltage of the DC bus. The discharge control circuit is configured to obtain a voltage applied to the variable resistor, as the voltage of the DC bus.

With such a configuration, the discharge threshold can be changed in response to the increase or decrease of the target voltage of the DC bus.

According to a power supply apparatus of an aspect of the present disclosure, the power supply apparatus is further provided with an anomaly determination circuit configured to determine an anomaly of the power converter circuit or the voltage control circuit. The anomaly determination circuit is configured to control the discharge circuit to stop consuming the power of the DC bus, when an anomaly occurs in the power converter circuit or the voltage control circuit.

With such a configuration, even if an anomaly occurs in the power converter circuit or the voltage control circuit, it is possible to prevent the discharge circuit from generating excessively high heat.

According to a power supply apparatus of an aspect of the present disclosure, the discharge threshold has hysteresis.

With such a configuration, it is possible to reduce the number of transitions between on and off of the discharge circuit to stably operate the power supply apparatus.

According to a power supply apparatus of an aspect of the present disclosure, the load apparatus includes a motor.

With such a configuration, the power supply apparatus can supply power to the load apparatus that generate the regenerative power.

### ADVANTAGEOUS EFFECTS OF INVENTION

According to the power supply apparatus of one aspect of the present disclosure, it is possible to reduce the fluctuation of the DC bus voltage caused by the regenerative power and the consumed power of the load apparatus to stably maintain the DC bus voltage, without significantly increasing the circuit size.

### BRIEF DESCRIPTION OF DRAWINGS

Fig. 1 is a block diagram showing an exemplary configuration of a power system according to a first embodiment.
Fig. 2 is a graph showing an exemplary voltage of DC buses 20a and 20b of the power system of Fig. 1.
Fig. 3 is a circuit diagram showing an exemplary configuration of a power supply apparatus 2 of Fig. 1.
Fig. 4 is a circuit diagram showing an exemplary configuration of a power supply apparatus 2A according to a first modified embodiment of the first embodiment.
Fig. 5 is a circuit diagram showing an exemplary configuration of a power supply apparatus 2B according to a second modified embodiment of the first embodiment.
Fig. 6 is a block diagram showing an exemplary configuration of a power system according to a second embodiment.
Fig. 7 is a circuit diagram showing an exemplary configuration of a power supply apparatus 2C of Fig. 6.
Fig. 8 is a circuit diagram showing an exemplary configuration of a power supply apparatus 2D according to a modified embodiment of the second embodiment.

### DESCRIPTION OF EMBODIMENTS

Hereinafter, an embodiment according to one aspect of the present disclosure will be described with reference to the drawings. In the drawings, the same reference signs denote similar components.

### [APPLICATION EXAMPLE]

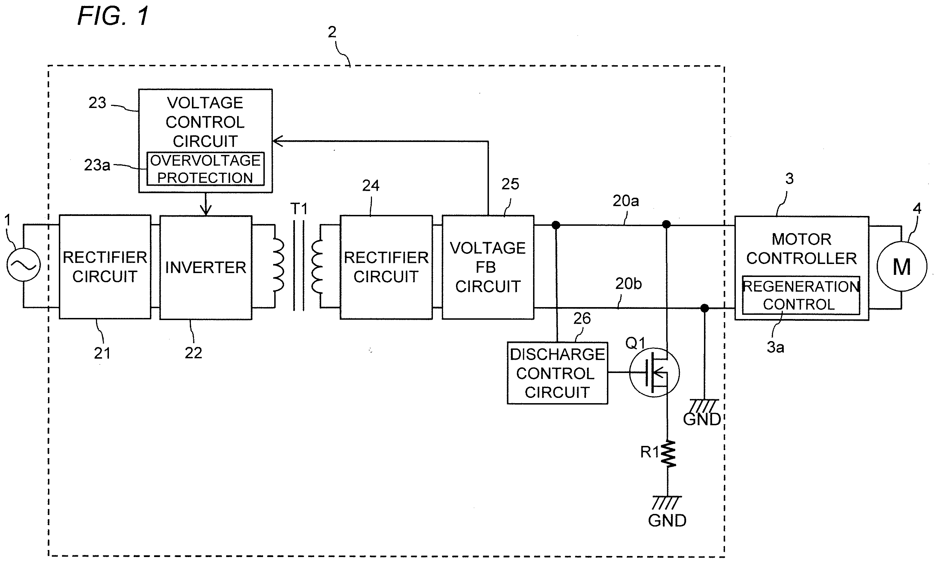

Fig. 1 is a block diagram showing an exemplary configuration of a power system according to a first embodiment. The power system of Fig. 1 is provided with: an AC power supply 1, a power supply apparatus 2, a motor controller 3, and a motor 4.

The AC power supply 1 may be, for example, a commercial single-phase or three-phase AC power supply.

The power supply apparatus 2 is supplied with power from the AC power supply 1, and then supplies DC power to the motor controller 3 and the motor 4, which are load apparatuses. The power supply apparatus 2 is provided with, at least, DC buses 20a and 20b, an overvoltage protection circuit 23a, a switch Q1, a resistor R1, and a discharge control circuit 26. The DC buses 20a and 20b are connected to the motor controller 3 and the motor 4. The overvoltage protection circuit 23a stops supplying power from the power supply apparatus 2 to the motor controller 3 and the motor 4, when the voltage of the DC buses 20a and 20b exceeds a predetermined overvoltage threshold. The voltage of the DC buses 20a and 20b indicates a voltage difference between the positive DC bus 20a and the negative DC bus 20b. The switch Q1 and the resistor R1 form a discharge circuit connected to the DC buses 20a and 20b. The switch Q1 is, for example, a field effect transistor. When the voltage of the DC buses 20a and 20b exceeds a discharge threshold that is higher than a target voltage of the DC buses 20a and 20b and lower than an overvoltage threshold, the discharge control circuit 26 turns on the switch Q1, and therefore, the power of the DC buses 20a and 20b is consumed by the resistor R1 to reduce the voltage of the DC buses 20a and 20b.

The motor controller 3 is supplied with power from the power supply apparatus 2, and controls operation of the motor 4. The motor 4 may generate regenerative power, and the generated regenerative power flows to the DC buses 20a and 20b of the power supply apparatus 2 via the motor controller 3. The motor controller 3 is provided with a regeneration control circuit 3a that consumes regenerative power to reduce the voltage of its internal bus (not shown), when the internal bus voltage exceeds a predetermined regeneration threshold due to the regenerative power.

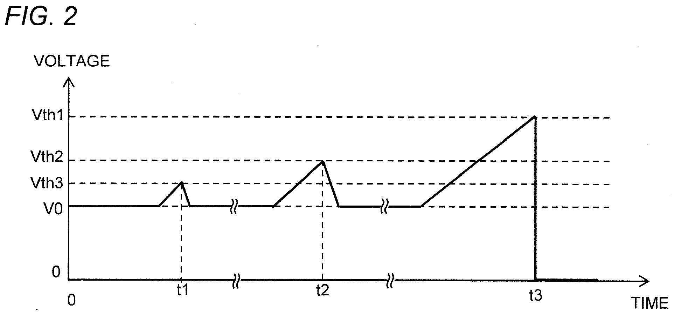

Fig. 2 is a graph showing an exemplary voltage of the DC buses 20a and 20b of the power system of Fig. 1. V0 denotes a target voltage of the DC buses 20a and 20b. The power supply apparatus 2 operates such that the voltage of the DC buses 20a and 20b matches or approaches the target voltage V0. Vth1 denotes an overvoltage threshold of the overvoltage protection circuit 23a. Vth2 denotes a regeneration threshold of the regeneration control circuit 3a. Vth3 denotes a discharge threshold of the discharge control circuit 26.

When the voltage of the DC buses 20a and 20b exceeds the overvoltage threshold Vth1 (time t3), the overvoltage protection circuit 23a stops supplying power from the power supply apparatus 2 to the motor controller 3 and the motor 4 as described above, and therefore, the voltage of the DC buses 20a and 20b becomes zero. In addition, when the internal bus voltage of the motor controller 3 exceeds the regeneration threshold Vth2 due to the regenerative power of the motor 4, the voltage of the DC buses 20a and 20b also exceeds the regeneration threshold Vth2 (time t2). In this case, the regeneration control circuit 3a consumes the regenerative power to reduce the internal bus voltage as described above, and therefore, the voltage of the DC buses 20a and 20b is reduced to the target voltage V0. However, the regeneration threshold Vth2 is set to a considerable voltage, and the regeneration control circuit 3a does not operate as long as the internal bus voltage of the motor controller 3 does not exceed the regeneration threshold Vth2, and therefore, the internal bus voltage and the DC buses 20a and 20b can not be reduced. On the other hand, according to the power supply apparatus 2 of Fig. 1, since the discharge threshold Vth3 is set to be smaller than the regeneration threshold Vth2, it is possible to immediately turn on the switch Q1 in response to the increase in the voltage of the DC buses 20a and 20b, to immediately reduce the voltage of the DC buses 20a and 20b.

According to the power supply apparatus 2 of the embodiment, it is possible to reduce the fluctuation of the voltage of the DC buses 20a and 20b, without mounting a large number of capacitors. In addition, according to the power supply apparatus 2 of the embodiment, when the voltage of the DC buses 20a and 20b increases due to the regenerative power of the motor 4, the switch Q1 is turned on, and the power of the DC buses 20a and 20b is consumed by the resistor R1, and therefore, it is possible to reduce the fluctuation of the voltage of the DC buses 20a and 20b caused by the regenerative power of the motor 4. In addition, according to the power supply apparatus 2 of the embodiment, when the voltage of the DC buses 20a and 20b increases due to the regenerative power of the motor 4, the power supply apparatus 2 continues to supply power to the motor controller 3 and the motor 4 without stopping. Therefore, then, even if the consumed power of the motor 4 rapidly increases, the power supply apparatus 2 can immediately increase its output power to supply required power to the motor 4. As described above, according to the power supply apparatus 2 of the embodiment, it is possible to reduce the fluctuation of the voltage of the DC buses 20a and 20b caused by the regenerative power and the consumed power of the motor 4 to stably maintain the voltage of the DC buses 20a and 20b, without significantly increasing the circuit size.

### [FIRST EMBODIMENT]

Hereinafter, the power supply apparatus according to the first embodiment will be further described.

### [EXEMPLARY CONFIGURATION OF FIRST EMBODIMENT]

Referring to Fig. 1, the power supply apparatus 2 is provided with: a rectifier circuit 21, an inverter 22, a voltage control circuit 23, a transformer T1, a rectifier circuit 24, and a voltage feedback circuit 25, as well as the DC buses 20a and 20b, the overvoltage protection circuit 23a, the switch Q1, the resistor R1, and the discharge control circuit 26.

The rectifier circuit 21 rectifies the AC power supplied from the AC power supply 1, into DC power. The inverter 22 is a power converter circuit that is provided on the primary side of the transformer T1, converts the DC power inputted from the rectifier circuit 21, into AC power at a certain voltage, and supplies the AC power to the transformer T1. The voltage control circuit 23 is provided on the primary side of the transformer T1, and controls the output voltage of the inverter 22 (that is, the voltage applied to a primary winding of the transformer T1). In the example of Fig. 1, the overvoltage protection circuit 23a is integrated with the voltage control circuit 23. The rectifier circuit 24 rectifies AC power generated in a secondary winding of the transformer T1, and outputs the rectified AC power to the DC buses 20a and 20b. The voltage feedback circuit 25 is provided on the secondary side of the transformer T1, and monitors the voltage of the DC buses 20a and 20b. The voltage control circuit 23 and the overvoltage protection circuit 23a obtain the voltage of the DC buses 20a and 20b, from the voltage feedback circuit 25. The voltage control circuit 23 controls the output voltage of the inverter 22 based on the voltage of the DC buses 20a and 20b, such that the voltage of the DC buses 20a and 20b matches or approaches the target voltage V0.

In the example of Fig. 1, the power supply apparatus 2 is configured as an isolated power converter circuit including the transformer T1.

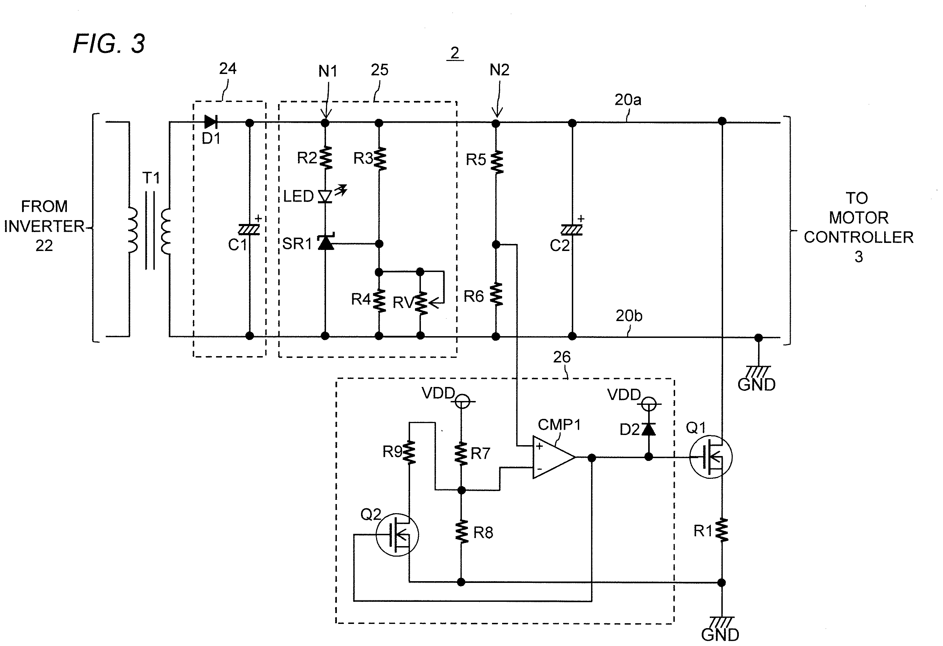

Fig. 3 is a circuit diagram showing an exemplary configuration of the power supply apparatus 2 of Fig. 1. Fig. 3 illustrates only a secondary circuit of the transformer T1 for ease of illustration. The power supply apparatus 2 is provided with the rectifier circuit 24, the voltage feedback circuit 25, the discharge control circuit 26, the switch Q1, and the resistor R1 described with reference to Fig. 1, and further provided with an electrolytic capacitor C2 and resistors R5 and R6.

The rectifier circuit 24 is provided with a diode D1 and an electrolytic capacitor C1. The diode D1 is connected to the secondary winding of the transformer T1. The electrolytic capacitor C1 is connected between the DC buses 20a and 20b, and smooths the voltage rectified by the diode D1.

The voltage feedback circuit 25 is provided with: resistors R2 to R4, a variable resistor RV, a shunt regulator SRI, and a light emitting diode LED. The resistor R2, the shunt regulator SRI, and the light emitting diode LED are connected in series between the DC buses 20a and 20b. The resistors R3 and R4 are also connected in series between the DC buses 20a and 20b, and the variable resistor RV is connected in parallel to the resistor R4. The target voltage of the DC buses 20a and 20b is set according to the resistance of the variable resistor RV. The voltage of the DC buses 20a and 20b is divided by the resistors R3 and R4 and the variable resistor RV, and the divided voltage is applied to the reference terminal of the shunt regulator SR1. A photocoupler is constituted by the light emitting diode LED as well as a phototransistor (not illustrated) provided in a primary circuit of the transformer T1, and the light emitting diode LED notifies the voltage control circuit 23 and the overvoltage protection circuit 23a of the voltage of the DC buses 20a and 20b at a node N1.

The resistors R5 and R6 are connected in series between the DC buses 20a and 20b, divide the voltage of the DC buses 20a and 20b at a node N2, and pass the divided voltage to the discharge control circuit 26.

The electrolytic capacitor C2 is connected between the DC buses 20a and 20b, and smooths the voltage of the DC buses 20a and 20b.

The discharge control circuit 26 is provided with: resistors R7 to R9, a switch Q2, a comparator CMP1, and a diode D2. The resistors R7 to R9 and the switch Q2 form a voltage source of a reference voltage corresponding to the discharge threshold Vth3. The comparator CMP1 compares the voltage of the DC buses 20a and 20b divided by the resistors R5 and R6, with the discharge threshold Vth3, and turns on the switch Q1 when the voltage of the DC buses 20a and 20b exceeds the discharge threshold Vth3. In the example of Fig. 3, the discharge threshold Vth3 has hysteresis. When the switch Q1 is turned on, the switch Q2 is also turned on at the same time, and therefore, the discharge threshold Vth3 varies. For example, when the target voltage V0 of the DC buses 20a and 20b is 48 V, the discharge threshold Vth3 for turning on the switch Q1 is set to 55 V, and the discharge threshold Vth3 for turning off the switch Q1 is set to 50 V.

In the example of Fig. 3, when the switch Q1 is turned on, a constant current flows through the switch Q1 and the resistor R1.

In the case where the regeneration threshold Vth2 is higher than the overvoltage threshold Vth1, when the voltage of the DC buses 20a and 20b increases due to the regenerative power, the overvoltage protection circuit 23a stops supplying power from the power supply apparatus 2 to the motor controller 3 and the motor 4, before the regeneration control circuit 3a operates. In order to operate the regeneration control circuit 3a without stopping supplying power from the power supply apparatus 2 to the motor controller 3 and the motor 4, the power supply apparatus 2 and the motor controller 3 should be configured to always satisfy Vth1 > Vth2.

### [MODIFIED EMBODIMENTS OF FIRST EMBODIMENT]

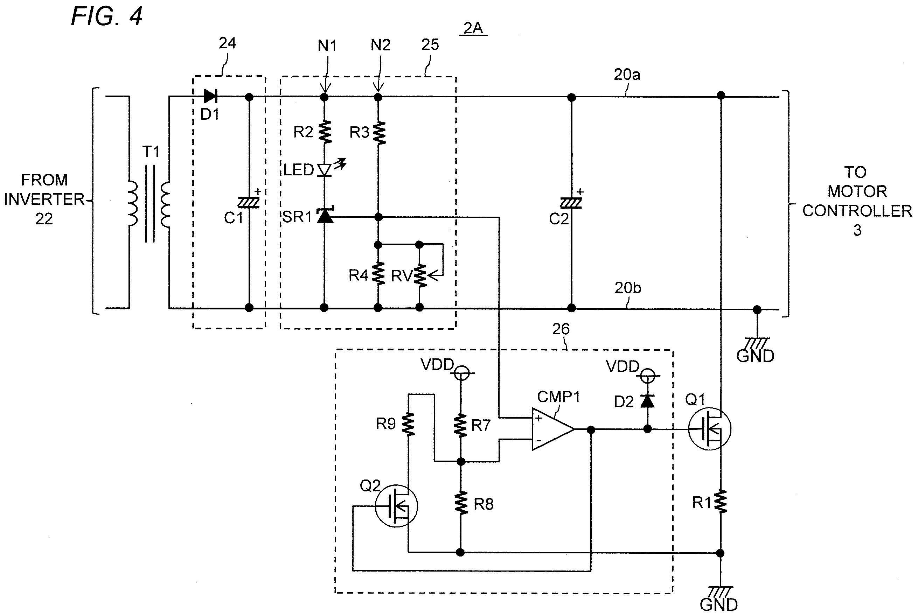

Fig. 4 is a circuit diagram showing an exemplary configuration of a power supply apparatus 2A according to a first modified embodiment of the first embodiment. The power supply apparatus 2A is configured in a manner similar to that of the power supply apparatus 2 of Fig. 3, with the resistors R5 and R6 being removed. Further, referring to Fig. 4, the discharge control circuit 26 obtains the voltage of the DC buses 20a and 20b from the voltage feedback circuit 25. Specifically, the discharge control circuit 26 obtains the voltage of the DC buses 20a and 20b at the node N2 divided by the resistors R3 and R4 and the variable resistor RV, that is, the voltage applied to the variable resistor RV, as the voltage of the DC buses 20a and 20b. The comparator CMP1 compares the voltage applied to the variable resistor RV, with the discharge threshold Vth3. As described above, the target voltage V0 of the DC buses 20a and 20b is set according to the resistance of the variable resistor RV. According to the power supply apparatus 2A of Fig. 4, even if the voltage of the DC buses 20a and 20b varies by changing the resistance of the variable resistor RV, the voltage inputted from the voltage feedback circuit 25 to the comparator CMP1 is the same as that before changing the resistance of the variable resistor RV. Therefore, the discharge threshold Vth3 equivalently varies in response to the increase or decrease of the target voltage V0 of the DC buses 20a and 20b. According to the power supply apparatus 2A of Fig. 4, the discharge control circuit 26 is operable to turn on the switch Q1 when the voltage of the DC buses 20a and 20b reaches a predetermined multiple of the target voltage V0, for example, 1.3 times, regardless of the magnitude of the target voltage V0 of the DC buses 20a and 20b. For example, in the case where the target voltage V0 is 50 V, the discharge control circuit 26 turns on the switch Q1 when the voltage of the DC buses 20a and 20b reaches 65 V. In addition, in the case where the target voltage V0 is 55 V, the discharge control circuit 26 turns on the switch Q1 when the voltage of the DC buses 20a and 20b reaches 71.5 V.

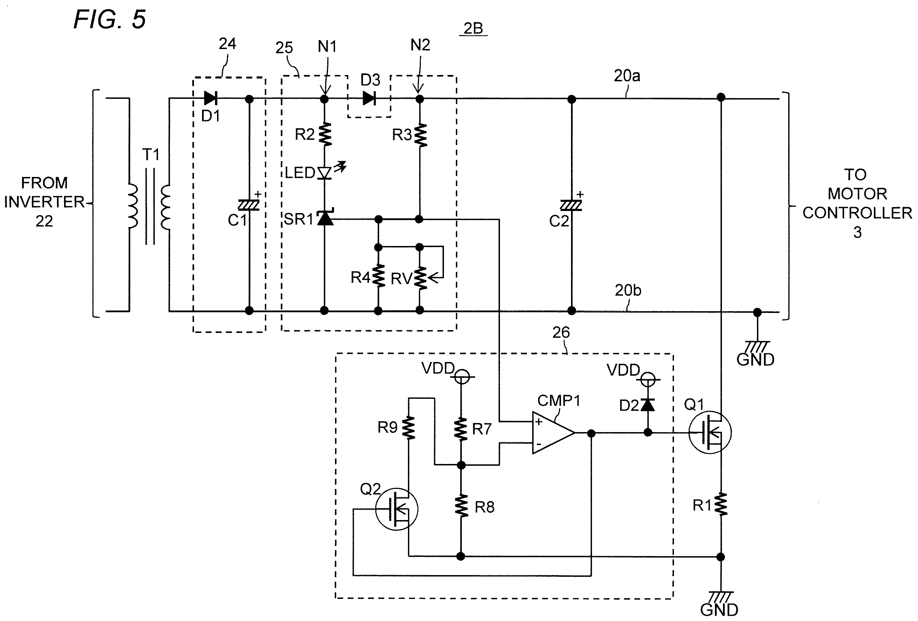

Fig. 5 is a circuit diagram showing an exemplary configuration of a power supply apparatus 2B according to a second modified embodiment of the first embodiment. The power supply apparatus 2B is provided with a diode D3, as well as the components of the power supply apparatus 2A of Fig. 4. As described above, the overvoltage protection circuit 23a obtains the voltage of the DC buses 20a and 20b at the node N1, from the voltage feedback circuit 25. In addition, the discharge control circuit 26 obtains the voltage of the DC buses 20a and 20b at the node N2 divided by the resistors R3 and R4 and the variable resistor RV, from the voltage feedback circuit 25. The node N2 is provided closer to the motor controller 3 than the node N1. The diode D3 is inserted into the DC bus 20a so as to block the current flowing from the node N2 to the node N1. In the configurations of the power supply apparatus 2 of Fig. 3 and the power supply apparatus 2A of Fig. 4, the power supply apparatus 2 and the motor controller 3 should be configured to always satisfy Vth1 > Vth2, in order to operate the regeneration control circuit 3a without stopping supplying power from the power supply apparatus 2 to the motor controller 3 and the motor 4, as described above. On the other hand, according to the power supply apparatus 2B of Fig. 4, since the diode D3 is inserted between the nodes N1 and N2, even if the voltage of the node N2 increases due to the regenerative power, the voltage of the node N1 does not increase. Therefore, it is possible to prevent the overvoltage protection circuit 23a from erroneously stopping supplying power from the power supply apparatus 2B to the motor controller 3 and the motor 4. Therefore, according to the power supply apparatus 2B of Fig. 4, even if Vth1 < Vth2, it is possible to consume the regenerative power using the discharge control circuit 26, the switch Q1, and the resistor R1, without stopping supplying power from the power supply apparatus 2 to the motor controller 3 and the motor 4, and operate the regeneration control circuit 3a.

Note that in the example of Fig. 5, the voltage control circuit 23 obtains the voltage of the DC buses 20a and 20b at the node N2, from the voltage feedback circuit 25. As described above, the voltage of the DC buses 20a and 20b at the node N2 divided by the resistors R3 and R4 and the variable resistor RV is applied to the reference terminal of the shunt regulator SRI, and this voltage is notified to the voltage control circuit 23 via the photocoupler including the light emitting diode LED.

### [ADVANTAGEOUS EFFECTS OF FIRST EMBODIMENT]

According to the power supply apparatuses 2, 2A, and 2B of the first embodiment, it is possible to reduce the fluctuation of the voltage of the DC buses 20a and 20b caused by the regenerative power and the consumed power of the motor 4 to stably maintain the voltage of the DC buses 20a and 20b, without significantly increasing the circuit size.

### [SECOND EMBODIMENT]

Hereinafter, a power supply apparatus according to a second embodiment will be described.

### [EXEMPLARY CONFIGURATION OF SECOND EMBODIMENT]

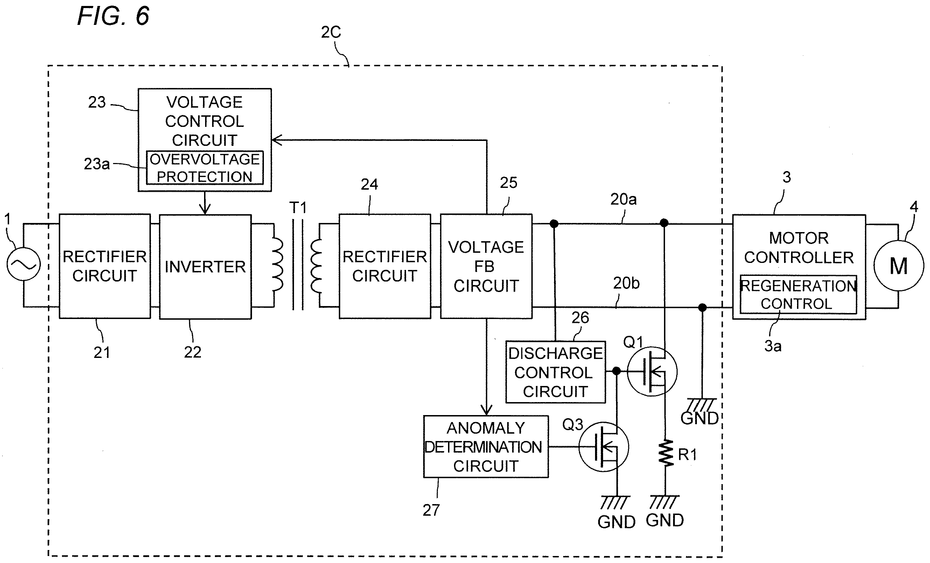

Fig. 6 is a block diagram showing an exemplary configuration of a power system according to a second embodiment. The power system of Fig. 6 is provided with a power supply apparatus 2C, instead of the power supply apparatus 2 for the power system of Fig. 1. The power supply apparatus 2C is provided with an anomaly determination circuit 27 and a switch Q3, as well as the components of the power supply apparatus 2 of Fig. 1.

The anomaly determination circuit 27 determines anomaly of a primary circuit of the transformer T1, that is, the inverter 22 or the voltage control circuit 23. The anomaly of the inverter 22 or the voltage control circuit 23 includes, for example, an excessively high output voltage being generated from the inverter 22 due to a failure of the inverter 22 or the voltage control circuit 23, or due to a failure in voltage feedback. The gate of the switch Q1 is grounded via the switch Q3. When an anomaly occurs in the inverter 22 or the voltage control circuit 23, the anomaly determination circuit 27 turns on the switch Q3 to control the switch Q1 to stop consuming power of DC buses 20a and 20b.

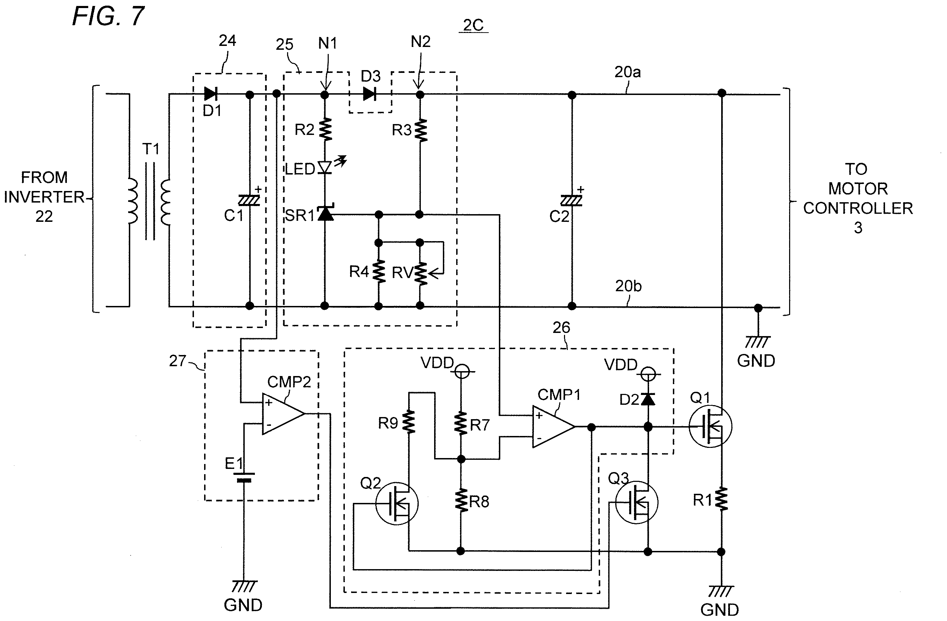

Fig. 7 is a circuit diagram showing an exemplary configuration of the power supply apparatus 2C of Fig. 6. Fig. 7 illustrates only a secondary circuit of the transformer T1 for ease of illustration. The anomaly determination circuit 27 is provided with the reference voltage source E1 and the comparator CMP2. The comparator CMP2 compares the voltage at a node on the secondary circuit of the transformer T1, with the voltage of the reference voltage source E1, and determines that an anomaly has occurred in the inverter 22 or the voltage control circuit 23, when the voltage of the voltage feedback circuit 25 exceeds the voltage of the reference voltage source E1. In the example of Fig. 7, the comparator CMP2 monitors the voltage at the node N1. When an anomaly occurs in the inverter 22 or the voltage control circuit 23, and an excessively high voltage is generated in a primary circuit of the transformer T1, the voltage of the node N1 in the secondary circuit of the transformer T1 increases. Since the diode D3 is inserted into the DC bus 20a so as to block the current flowing from the node N2 to the node N1 as described above, the voltage at the node N1 does not increase due to the regenerative power of the motor 4. The other components of the power supply apparatus 2C are configured in a manner similar to that of the corresponding components of the power supply apparatus 2B of Fig. 5. In the case where the voltage of the DC buses 20a and 20b increases abnormally, when the discharge control circuit 26 turns on the switch Q1, the switch Q1 and the resistor R1 may be damaged by generating excessively high heat. On the other hand, when the power supply apparatus 2C of Fig. 7 determines that an anomaly has occurred in the inverter 22 or the voltage control circuit 23, the power supply apparatus 2C forcibly turns off the switch Q1 by turning on the switch Q3. As a result, even if an anomaly occurs in the inverter 22 or the voltage control circuit 23, it is possible to prevent the switch Q1 and the resistor R1 from generating excessively high heat.

### [MODIFIED EMBODIMENT OF SECOND EMBODIMENT]

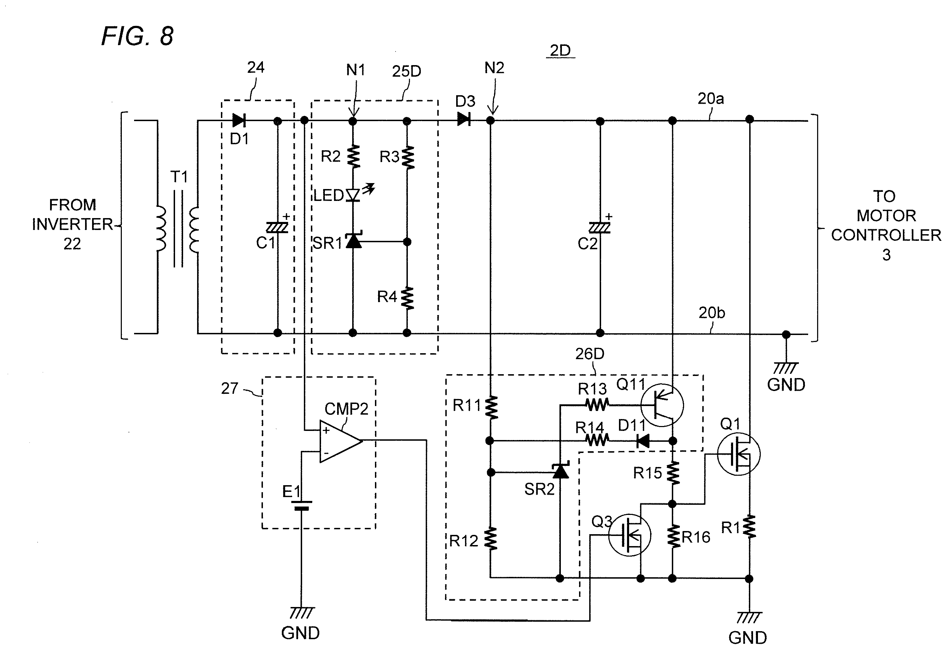

Fig. 8 is a circuit diagram showing an exemplary configuration of a power supply apparatus 2D according to a modified embodiment of the second embodiment. The power supply apparatus 2D is provided with a voltage feedback circuit 25D and a discharge control circuit 26D, instead of the voltage feedback circuit 25 and the discharge control circuit 26 of Fig. 7, and further provided with resistors R15 and R16.

The voltage feedback circuit 25D is configured in a manner similar to that of the voltage feedback circuit 25 of Fig. 7, with the variable resistor RV being removed.

The discharge control circuit 26D is provided with: resistors R11 to R14, a shunt regulator SR2, a switch Q11, and a diode D11. The switch Q11 is, for example, a bipolar transistor. The emitter of the switch Q11 is connected to the DC bus 20a, and the collector of the switch Q11 is grounded via the resistors R15 and R16 connected in series with each other. The connection point between the resistors R15 and R16 is connected to the gate of the switch Q1. The base of the switch Q11 is connected to the cathode of the shunt regulator SR2 via the resistor R13. The resistors R11 and R12 divide the voltage of the DC buses 20a and 20b at the node N2, apply the divided voltage to the control terminal of the shunt regulator SR2, and apply the divided voltage to the cathode of the diode D11 via the resistor R14. The anode of diode D11 is connected to the collector of switch Q11. When the voltage of the DC buses 20a and 20b increases, the cathode of the shunt regulator SR2 becomes a low level, and the switch Q11 is turned on. As a result, the gate voltage of the switch Q1 becomes a high level, and the switch Q1 is turned on. The discharge threshold Vth3 for turning on the switch Q1 has hysteresis due to the diode D11 and the resistor R14.

The diode D3 is inserted into the DC bus 20a so as to block the current flowing from the node N2 to the node N1.

Since the power supply apparatus 2D of Fig. 8 is provided with the anomaly determination circuit 27, it is possible to prevent the switch Q1 and the resistor R1 from generating excessively high heat, even if an anomaly occurs in the inverter 22 or the voltage control circuit 23, in a manner similar to that of the power supply apparatus 2C of Fig. 7.

### [ADVANTAGEOUS EFFECTS OF SECOND EMBODIMENT]

According to the power supply apparatuses 2C and 2D of the second embodiment, it is possible to reduce the fluctuation of the voltage of the DC buses 20a and 20b caused by the regenerative power and the consumed power of the motor 4 to stably maintain the voltage of the DC buses 20a and 20b, without significantly increasing the circuit size, in a manner similar to that of the power supply apparatuses 2, 2A, and 2B of the first embodiment. In addition, according to the power supply apparatuses 2C and 2D of the second embodiment, even if an anomaly occurs in the inverter 22 or the voltage control circuit 23, it is possible to prevent the switch Q1 and the resistor R1 from generating excessively high heat.

### [OTHER MODIFIED EMBODIMENTS]

Although the embodiments of the present disclosure have been described in detail above, the above descriptions are mere examples of the present disclosure in all respects. Needless to say, various improvements and modifications can be made without departing from the scope of the present disclosure. For example, the following changes can be made. Hereinafter, components similar to those of the above embodiments are indicated by similar reference signs, and points similar to those of the above embodiments will be omitted as appropriate. The following modified embodiments can be combined as appropriate.

Although Fig. 3 and others illustrate exemplary cases where the rectifier circuit 24 is configured as a half-wave rectifier circuit including one diode D1, the rectifier circuit may be configured as a full-wave rectifier circuit.

In addition, the power supply apparatus may be configured to be supplied with power from a DC power supply, instead of the AC power supply.

In addition, the power supply apparatus may be configured as a non-isolated power converter circuit not including a transformer.

Although Figs. 1 and 6 illustrate exemplary cases where the regeneration control circuit 3a is integrated with the motor controller 3, the regeneration control circuit 3a may be provided separately from the motor controller 3.

The power supply apparatus may be configured to supply power to any load apparatus that generates regenerative power, without being limited to the motor controller 3 and the motor 4.

### [CONCLUSION]

The power supply apparatuses according to aspects of the present disclosure may be expressed as follows.

According to a power supply apparatus of an aspect of the present disclosure, the power supply apparatus 2, 2A to 2D for supplying DC power to a load apparatus is provided with: a direct current (DC) buses 20a and 20b, an overvoltage protection circuit 23a, a discharge circuit, and a discharge control circuit 26. The direct current (DC) bus (20a, 20b) are connected to the load apparatus. The overvoltage protection circuit 23a is configured to stop supplying power from the power supply apparatus 2 to the load apparatus, when a voltage of the DC bus (20a, 20b) exceeds a predetermined overvoltage threshold. The discharge circuit is connected to the DC bus (20a, 20b). The discharge control circuit 26 is configured to control the discharge circuit to consume power of the DC bus (20a, 20b) to reduce the voltage of the DC bus (20a, 20b), when the voltage of the DC bus (20a, 20b) exceeds a discharge threshold, the discharge threshold being higher than a target voltage of the DC bus (20a, 20b) and lower than the overvoltage threshold.

According to a power supply apparatus 2B to 2D of an aspect of the present disclosure, the overvoltage protection circuit 23a is configured to monitor the voltage of the DC bus (20a, 20b) at a first node N1. The discharge control circuit 26 is configured to monitor the voltage of the DC bus (20a, 20b) at a second node N2 closer to the load apparatus than the first node N1. The power supply apparatus 2 is further provided with a diode D3 configured to block a current flowing from the second node N2 to the first node N1.

According to a power supply apparatus 2A to 2C of an aspect of the present disclosure, the power supply apparatus 2A to 2C is further provided with: a transformer T1, a inverter 22, a voltage control circuit 23, and a voltage feedback circuit 25. The inverter 22 is provided on a primary side of the transformer T1, and configured to convert an input voltage into an output voltage and supply the output voltage to the transformer T1. The voltage control circuit 23 is provided on the primary side of the transformer T1, and configured to control an output voltage of the inverter 22. The voltage feedback circuit 25 is provided on a secondary side of the transformer T1, and configured to monitor the voltage of the DC bus (20a, 20b). The overvoltage protection circuit 23a, the voltage control circuit 23, and the discharge control circuit 26 obtain the voltage of the DC bus (20a, 20b) from the voltage feedback circuit 25.

According to a power supply apparatus 2B, 2C of an aspect of the present disclosure, the voltage feedback circuit 25 is provided with a variable resistor RV configured to set the target voltage of the DC bus (20a, 20b). The discharge control circuit 26 is configured to obtain a voltage applied to the variable resistor RV, as the voltage of the DC bus (20a, 20b).

According to a power supply apparatus 2C, 2D of an aspect of the present disclosure, the power supply apparatus 2C, 2D is further provided with an anomaly determination circuit 27 configured to determine an anomaly of the inverter 22 or the voltage control circuit 23. The anomaly determination circuit 27 is configured to control the discharge circuit to stop consuming the power of the DC bus (20a, 20b), when an anomaly occurs in the inverter 22 or the voltage control circuit 23.

According to a power supply apparatus 2, 2A to 2D of an aspect of the present disclosure, the discharge threshold has hysteresis.

According to a power supply apparatus 2, 2A to 2D of an aspect of the present disclosure, the load apparatus includes a motor 4.

### INDUSTRIAL APPLICABILITY

The power supply apparatus according to each aspect of the present disclosure is available to supply power to a load apparatus that generates regenerative power.

### REFERENCE SIGNS LIST

1: AC power supply
2, 2A to 2D: power supply apparatus
3: motor controller
3a: regeneration control circuit
4: motor
20a, 20b: direct current (DC) bus
21: rectifier circuit
22: inverter
23, voltage control circuit
23a: overvoltage protection circuit
24: rectifier circuit
25, 25D: voltage feedback circuit
26: discharge control circuit
27: anomaly determination circuit
C1, C2: electrolytic capacitor
CMP1, CMP2: comparator
D1 to D3, D11: diode
E1: reference voltage source
LED: light emitting diode
Q1 to Q3: switch
R1 to R9, R11 to R16: resistor
SR1, SR2: shunt regulator
T1: transformer
RV: variable resistor

## Claims

1. A power supply apparatus for supplying DC power to a load apparatus, the power supply apparatus comprising:
a direct current (DC) bus connected to the load apparatus;
an overvoltage protection circuit configured to stop supplying power from the power supply apparatus to the load apparatus, when a voltage of the DC bus exceeds a predetermined overvoltage threshold;
a discharge circuit connected to the DC bus; and
a discharge control circuit configured to control the discharge circuit to consume power of the DC bus to reduce the voltage of the DC bus, when the voltage of the DC bus exceeds a discharge threshold, the discharge threshold being higher than a target voltage of the DC bus and lower than the overvoltage threshold.

2. The power supply apparatus as claimed in claim 1,
wherein the overvoltage protection circuit is configured to monitor the voltage of the DC bus at a first node,
wherein the discharge control circuit is configured to monitor the voltage of the DC bus at a second node closer to the load apparatus than the first node, and
wherein the power supply apparatus further comprises a diode configured to block a current flowing from the second node to the first node.

3. The power supply apparatus as claimed in claim 1 or 2, further comprising:
a transformer;
a power converter circuit provided on a primary side of the transformer, and configured to convert an input voltage into an output voltage and supply the output voltage to the transformer;
a voltage control circuit provided on the primary side of the transformer, and configured to control an output voltage of the power converter circuit; and
a voltage feedback circuit provided on a secondary side of the transformer, and configured to monitor the voltage of the DC bus,
wherein the overvoltage protection circuit, the voltage control circuit, and the discharge control circuit obtain the voltage of the DC bus from the voltage feedback circuit.

4. The power supply apparatus as claimed in claim 3,
wherein the voltage feedback circuit comprises a variable resistor configured to set the target voltage of the DC bus, and
wherein the discharge control circuit is configured to obtain a voltage applied to the variable resistor, as the voltage of the DC bus.

5. The power supply apparatus as claimed in claim 3 or 4, further comprising an anomaly determination circuit configured to determine an anomaly of the power converter circuit or the voltage control circuit,
wherein the anomaly determination circuit is configured to control the discharge circuit to stop consuming the power of the DC bus, when an anomaly occurs in the power converter circuit or the voltage control circuit.

6. The power supply apparatus as claimed in any one of claims 1 to 5,
wherein the discharge threshold has hysteresis.

7. The power supply apparatus as claimed in any one of claims 1 to 6,
wherein the load apparatus includes a motor.
